# FASCICULE DE BREVET EUROPEEN

(11) **EP 0 468 890 B1**
(45) Date de publication et mention de la délivrance du brevet: **30.08.1995**
(21) Numéro de dépôt: 91402062.3
(22) Date de dépôt: 24.07.1991
(51) Int. Cl.: G02B 26/04, B23K 26/06

(54) **Dispositif d'obturation d'un faisceau devant frapper par intermittence un point déterminé**
Verschlussvorrichtung für einen Strahl, der einen bestimmten Punkt zu treffen hat
Obturating device for a beam having to hit intermittently a determined point

(30) Priorité: 25.07.1990 FR 9009519
(43) Date de publication de la demande: 29.01.1992
(73) Titulaire: AUTOMOBILES PEUGEOT, 75116 Paris (FR); AUTOMOBILES CITROEN, 92200 Neuilly-sur-Seine (FR)
(72) Inventeur: Pichot, Bertrand, F-91070 Bondoufle (FR)
(74) Mandataire: Durand, Yves Armand Louis

(56) Documents cités:
- EP-A- 0 279 505
- GB-A- 2 022 492
- GB-A- 2 032 325
- GB-A- 2 117 533
- US-A- 3 990 787
- US-A- 4 218 606
- US-A- 4 701 591

## Description

La présente invention se rapporte, d'une manière générale, à un dispositif d'obturation d'un faisceau devant frapper par intermittence un point déterminé, connu, par exemple, de US-A-3,990,787 et GB-A-2 117 533.

Elle concerne plus particulièrement un dispositif d'obturation du faisceau d'un laser continu destiné à frapper un point déterminé pour effectuer des opérations de soudage par exemple.

Dans certaines applications utilisant un faisceau laser, comme par exemple le soudage de pièces minces, on utilise de préférence un laser pulsé ou déclenché pour limiter l'échauffement des pièces afin de ne pas les déformer.

Cependant, la puissance d'un laser pulsé est parfois difficile à maîtriser et nécessite un temps de réglage ou de remise en puissance entre deux impulsions, qui peut être assez long.

C'est pourquoi, dans certains cas, il est préférable d'utiliser un laser non pulsé émettant un faisceau continu, et d'interrompre ce faisceau continu à intervalles réguliers, par exemple à l'aide d'un miroir pivotant. Ainsi, la source laser est plus facile à maîtriser et plus fiable dans de nombreuses applications.

Toutefois, avec un miroir pivotant qui peut être interposé dans le trajet du faisceau laser, le temps d'ouverture, c'est-à-dire le temps de passage du faisceau ne peut guère être abaissé au dessous de 5 millisecondes, cela tenant notamment à l'inertie du miroir et aux moyens assurant son pivotement. En outre, les miroirs ne peuvent pas supporter des puissances trop fortes et supérieures à environ 2 kilowatts, à moins de les détériorer.

Or, dans certaines applications, il est souhaitable d'utiliser des temps d'ouverture du faisceau qui soient plus courts que 5 millisecondes et par exemple de l'ordre de 1 milliseconde, ainsi que des puissances supérieures à 2 kilowatts.

La présente invention parvient à ces buts en proposant un dispositif d'obturation d'un faisceau laser continu qui permet d'obtenir des temps d'ouverture très faibles, de l'ordre de la milliseconde, tout en accceptant de fortes puissances et qui, en outre, permet de régler, avec souplesse et de façon fiable, le temps d'ouverture, c'est-à-dire le temps pendant lequel on laisse passer le faisceau.

A cet effet, l'invention a pour objet un dispositif comme défini dans la revendication 1, pour l'obturation d'un faisceau tel que le faisceau d'un laser continu destiné à frapper un point déterminé pour effectuer des opérations de soudage par exemple. Les disques utilisés dans ce dispositif peuvent être agencés concentriquement.

Suivant une autre caractéristique du dispositif de l'invention, l'ouverture dans les supports ou disques est une fenêtre pratiquée sur la périphérie desdits supports ou disques.

Suivant une réalisation particulière, la fenêtre présente deux bords s'étendant suivant des rayons du disque et formant entre eux un angle égal à la moitié de l'angle au centre tangent au faisceau.

Le système de réduction reliant au moins deux disques comprend, selon l'invention, un premier arbre solidaire de l'un des disques et un pignon solidaire de cet arbre et entraînant, par l'intermédiaire d'une pignonerie, une roue dont le moyeu constitue un deuxième arbre concentrique au premier et sur lequel est monté l'autre disque.

Suivant une autre réalisation, le système de réduction relie trois disques concentriques percés chacun d'au moins une ouverture et comprend :
- un premier arbre entraîné par un moteur et sur lequel est monté un premier disque ;
- une courroie entraînée par ce premier arbre et entraînant un arbre denté monté à rotation sur une structure mobile en rotation autour de l'axe de rotation des disques ;
- une première courroie crantée coopérant avec cet arbre denté et avec un moyeu fixe ;
- un moyeu solidaire de la structure mobile précitée et constituant un deuxième arbre concentrique au premier arbre et sur lequel est monté un deuxième disque ; et
- une deuxième courroie crantée coopérant avec l'arbre denté et avec une roue dentée dont le moyeu constitue un troisième arbre concentrique aux deux autres et sur lequel est monté un troisième disque.

L'élément précité autorisant la transmission du faisceau peut être constitué par au moins un miroir monté sur un support.

Dans ce cas, les moyens de commande du support, qui peut revêtir la forme d'un disque, comprennent une roue montée sur un bâti et mobile en rotation grâce à des moyens d'entraînement, et un pignon monté sur ledit bâti, ce pignon engrenant avec une denture de la roue et entraînant ledit disque qui porte un miroir.

Un multiplicateur de vitesse peut être interposé entre le pignon et le disque portant le miroir.

Le faisceau peut passer au travers d'un puits ménagé au centre de la roue avec denture.

Mais d'autres caractéristiques et avantages de l'invention apparaîtront mieux dans la description détaillée qui suit et se réfère aux dessins annexés, donnés uniquement à titre d'exemple, et dans lesquels.

La figure 1 est une vue schématique en élévation d'un premier mode de réalisation de dispositif obturateur selon cette invention.

La figure 2 est une vue schématique et en élévation d'un deuxième mode de réalisation de ce dispositif obturateur.

La figure 3 illustre, en coupe axiale, un dispositif obturateur à trois disques fonctionnellement reliés par un système de réduction.

La figure 4 est une vue similaire à celle de la figure 3, mais montrant une variante du système de réduction.

La figure 5 est une vue en coupe axiale d'un dispositif obturateur à trois disques avec système de réduction suivant la figure 4, et comportant en outre un système de sécurité par interruption du faisceau.

La figure 6 est une vue suivant la flèche VI de la figure 5.

La figure 7 est une vue en coupe axiale d'encore une autre variante d'un dispositif obturateur.

La figure 8 est une vue schématique et en plan de dessus, suivant la flèche VIII de la figure 7, du dispositif obturateur montré sur ladite figure 7.

La figure 9 est une vue schématique en élévation d'un autre dispositif d'obturation dans lequel les supports sont des tambours cylindriques.

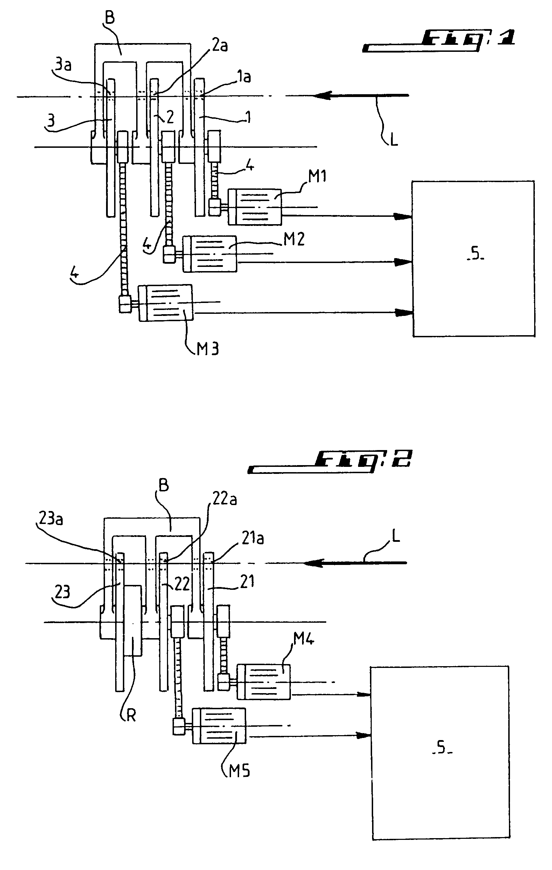

En se reportant à la figure 1, on voit un exemple de réalisation d'un dispositif obturateur d'un faisceau laser L continu qui comprend trois disques concentriques 1, 2, 3 montés tournants sur un bâti B et entraînés chacun, au moyen d'une transmission appropriée 4, par un moteur M1, M2 et M3.

Chaque disque tournant 1, 2, 3 comporte une ouverture ou fenêtre 1a, 2a, 3a permettant, lorsqu'elles sont alignées et à des intervalles de temps prédéterminés, la transmission du faisceau laser jusqu'à un point déterminé qui peut être par exemple un point de soudage de tôles.

On a montré schématiquement en 5 un système de commande de vitesse et de position des trois moteurs M1, M2, M3 entraînant indépendamment et respectivement les trois disques opaques 1, 2, 3.

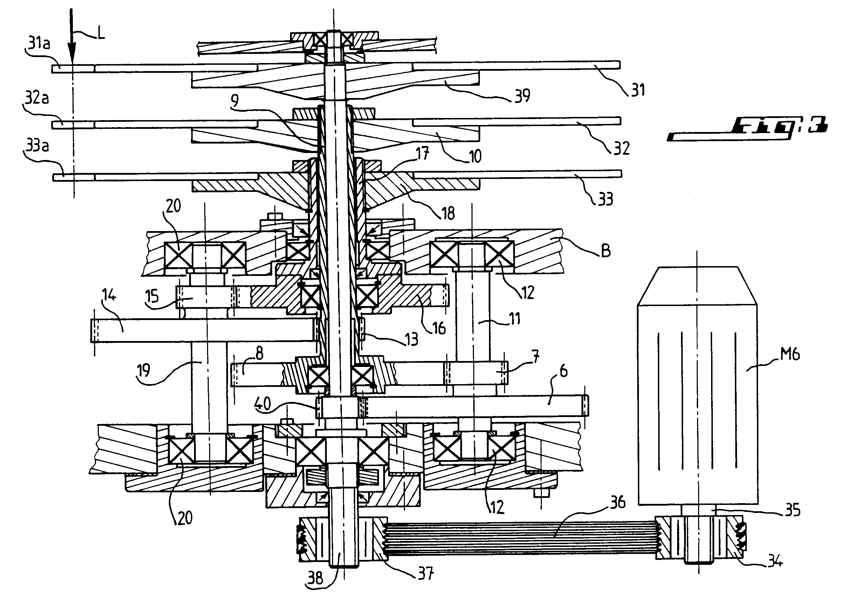

Dans le mode de réalisation de la figure 2, on voit que le dispositif obturateur comporte encore trois disques tournants 21, 22, 23 mais ici, seul l'un des disques, à savoir le disque 21, est entraîné indépendamment par un moteur M4. En effet, les deux autres disques 22, 23 sont liés ou couplés par un système de réduction R et sont entraînés par un moteur M5 relié avec le moteur M4 à la commande 5 de vitesse et de position de ces deux moteurs.

Comme dans le mode de réalisation de la figure 1, chaque disque 21, 22, 23 comporte une fenêtre ou une ouverture 21a, 22a, 23a, permettant, lorsque ces ouvertures sont en coïncidence, le passage du faisceau laser L à des intervalles de temps prédéterminés, pour que le faisceau atteigne sa cible.

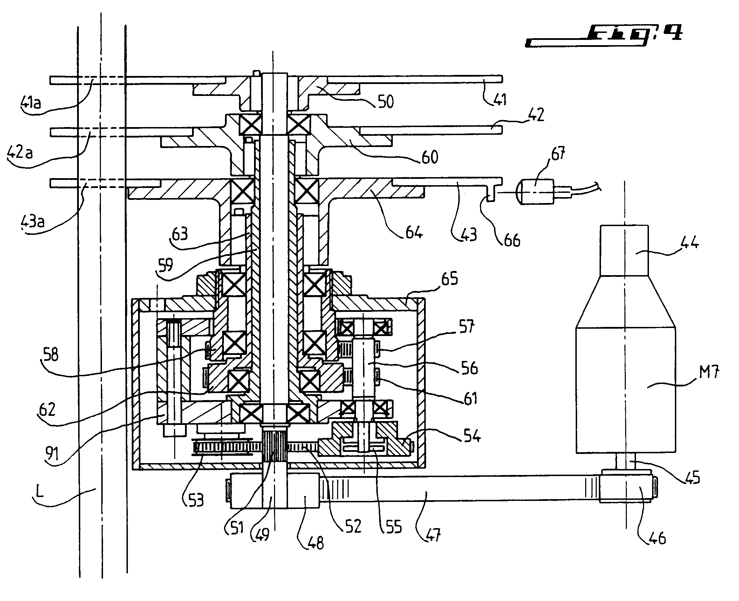

Dans l'exemple de réalisation visible sur la figure 3, un seul moteur M6 avec capteur de position intégré (non représenté) entraîne un ensemble de trois disques concentriques 31, 32, 33 liés par un double réducteur qui sera décrit en détail ci-après.

Le moteur M6 entraîne par une poulie 34, calée sur son arbre de sortie 35, une courroie crantée 36 transmettant le mouvement de rotation à une poulie 37 calée sur un premier arbre 38 solidaire du disque 31 qui est le disque entraîné à la vitesse la plus rapide. Plus précisément, l'arbre 38 est cannelé en partie haute et entraîne un support 39 dont est solidaire le disque 31.

Un pignon 40 solidaire de l'arbre 38 engrène avec une roue 6, elle-même solidaire en rotation d'un pignon 7 qui engrène avec une roue 8 dont le moyeu constitue un deuxième arbre 9 extérieurement concentrique au premier arbre 8 et sur lequel est monté un support 10 portant le disque 32.

On observera ici que les deux pignons 6, 7 sont calés sur un même arbre 11 monté fou par ses extrémités, et par l'intermédiaire de roulements 12, sur le bâti B.

Le deuxième arbre 9 porte un pignon 13 engrenant avec une roue 14 elle-même solidaire en rotation d'un pignon 15 qui engrène avec une roue 16. Le moyeu de cette roue 16 constitue un troisième arbre 17, extérieurement concentrique au deuxième arbre 9 et qui, par des cannelures ou analogues, entraîne un support 18 portant le disque 33. On observera encore ici que les pignons 14 et 15, comme c'était le cas des pignons 6 et 7, sont solidaires d'un arbre 19 monté fou par ses extrémités et cela par l'intermédiaire de roulements 20, sur le bâti B.

Comme pour les modes de réalisation décrits précédemment, le faisceau laser L est dirigé perpendiculairement aux trois disques concentriques 31, 32, 33, qui comportent chacun, à leur périphérie, une ouverture 31a, 32a, 33a, qui, lorsqu'elles sont en coincidence, laissent passer le faisceau laser L.

Au lieu de prévoir deux étages de réduction, comme il vient d'être décrit, on pourrait parfaitement, sans sortir du cadre de l'invention, prévoir un seul étage de réduction, étant entendu que les rapports de réduction peuvent être quelconques.

On comprend donc que grâce au dispositif obturateur selon cette invention, on pourra obtenir un temps de passage très court, de l'ordre de la milliseconde, pour le faisceau, et on pourra faire varier de façon contrôlée le temps de cycle, c'est-à-dire l'intervalle de temps entre deux alignements ou coïncidences des ouvertures ou fenêtres des disques, étant entendu qu'on peut agir sur le nombre et la largeur des fenêtres, sur le rapport de réduction et sur la vitesse du moteur d'entraînement des disques.

C'est ainsi que par exemple on pourra obtenir l'alignement des trois encoches 31a, 32a, 33a, c'est-à-dire la transmission du faisceau laser L, pour un tour du disque 33 le plus lent, pour 9 tours du disque intermédiaire 32 et pour 81 tours du disque 31 le plus rapide. Si le disque le plus lent 33 comporte trois ouvertures au lieu d'une, le temps de cycle, c'est-à-dire l'intervalle de temps entre deux alignements des encoches sera alors divisé par trois, le temps d'ouverture ou de passage du faisceau laser L étant constant et pouvant être très court comme expliqué précédemment.

Le temps d'ouverture, et également le temps de cycle, peuvent être déterminés par un choix judicieux de la vitesse de rotation des disques et du nombre et des dimensions des ouvertures pratiquées dans les disques.

A cet égard, il n'est pas nécessaire que la largeur des ouvertures ou des fenêtres du disque le plus rapide soit égale au diamètre du faisceau. Ainsi, une ou chaque fenêtre de ce disque peut présenter deux bords s'étendant suivant des rayons du disque et formant entre eux un angle égal à la moitié de l'angle au centre tangent au faisceau laser. Dans ce cas, on aura un même temps d'exposition avec une vitesse de disque deux fois moindre, ce qui peut être avantageux. On notera que seulement la ou les fenêtres du disque le plus rapide ont une dimension inférieure au diamètre du faisceau.

On ajoutera ici que le faisceau laser L frappe le disque 31 qui est celui tournant à la vitesse la plus rapide, de sorte que ledit faisceau, avantageusement, ne risquera pas de détériorer ce disque.

Enfin, on précisera que le capteur incorporé au moteur M6 permet de contrôler la vitesse de ce moteur ainsi que la position angulaire de son arbre de sortie 35. Ainsi on aura une référence, et la référence zéro sera par exemple celle correspondant à l'alignement des trois ouvertures ou encoches prévues à la périphérie externe des disques ou à l'intérieur de cette périphérie.

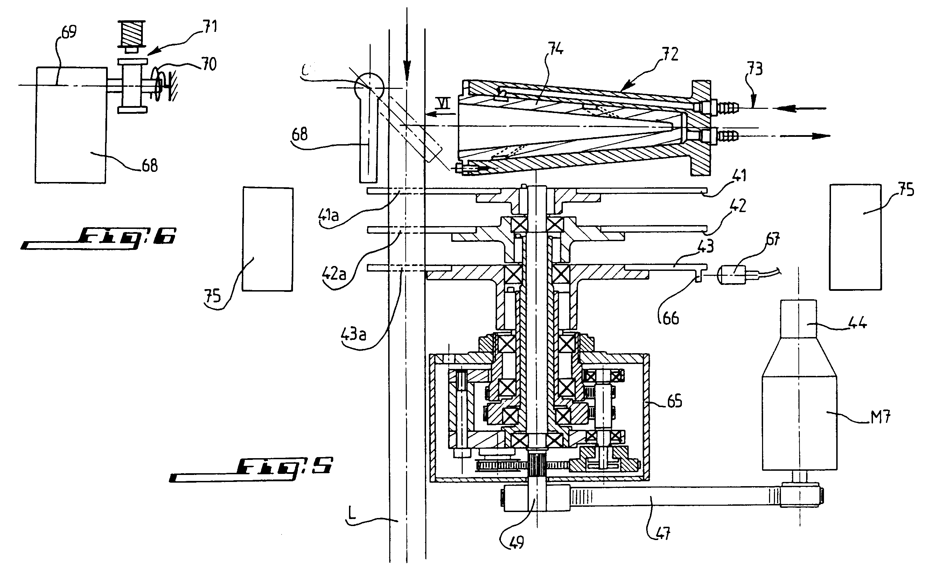

On se reportera maintenant à la figure 4 pour décrire une autre variante du dispositif obturateur à trois disques selon cette invention et possédant un système de réduction différent de celui de la figure 3, étant entendu que, globalement parlant, le principe de fonctionnement des dispositifs obturateurs des figures 3 et 4 est le même.

Un moteur M7 auquel est associé un codeur de position 44 indiquant la position angulaire de ce moteur, entraîne par son arbre de sortie 45 une poulie 46 qui à son tour entraîne, par l'intermédiaire d'une courroie crantée 47, une poulie 48 calée sur un premier arbre 49. Cet arbre 49, à vitesse de rotation rapide, est solidaire d'un support 50 portant un premier disque 41 muni d'une fenêtre ou ouverture 41 a.

L'arbre 49 comporte une zone dentée 51 et entraîne une courroie crantée 52 tendue par un galet fou 53 et entraînant une poulie dentée 54. Un système de serrage 55 solidarise la poulie dentée 54 avec un arbre denté 56 monté à rotation dans une structure ou carcasse mobile 91 en forme de cage cylindrique, cette structure mobile étant elle-même montée à rotation autour de l'axe de rotation des disques 41, 42 et 43.

On a montré en 57 une première courroie crantée qui coopère avec l'arbre denté 56 et avec un moyeu fixe 58. Ainsi, la courroie crantée 57 liée au moyeu fixe 58 oblige la structure 91 à tourner sur elle-même lors de la rotation de l'arbre denté 56.

On a montré en 59 un moyeu solidaire de la structure mobile 91 et constituant un deuxième arbre extérieurement concentrique au premier arbre 49 et sur lequel est monté un support 60 portant le disque 42.

Une deuxième courroie crantée 61 coopère avec l'arbre denté 56 et avec une roue dentée 62 dont le moyeu 63 constitue un troisième arbre extérieurement concentrique aux deux autres arbres et sur lequel est monté un support 64 portant le troisième disque 43.

On a montré en 65 une enveloppe en forme de carter sur lequel le moyeu 58 est fixé. Ce carter est fixé sur un bâti (non représenté) portant le moteur M7.

Revenant à l'arbre denté 56, on comprend qu'en raison de sa rotation sur lui-même et de son déplacement orbital, il entraîne, via la courroie crantée 61, la poulie 62 qui possède un diamètre différent de celui du moyeu 58, de sorte que le moyeu 63 et donc le disque 43 seront entraînés suivant un certain rapport de réduction. Sur le disque 43 est prévue une came 66 passant en regard d'un détecteur 67 qui peut être une cellule photoélectrique ou tout autre moyen approprié. La came 66, au passage devant le détecteur 67 permettra la détection de l'alignement des trois ouvertures 41a, 42a, 43a.

Le fonctionnement et les avantages de la réalisation qui vient d'être décrite en référence à la figure 4 ne seront pas donnés ici, puisque cela a déjà été fait à propos de la variante de la figure 3.

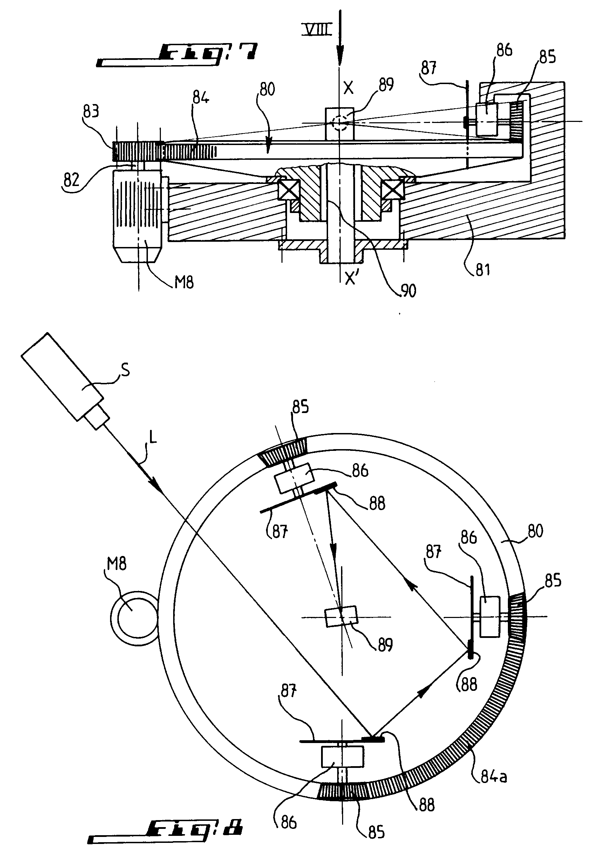

Dans la variante illustrée sur la figure 5, on retrouve le dispositif obturateur à trois disques, 41,42, 43 décrit précédemment et quine sera pas décrit à nouveau ici.

On a seulement ajouté sur la figure 5 un dispositif de sécurité du matériel et des personnes, dans le cas où ce dispositif est utilisé avec un faisceau laser de grande puissance.

En effet, dans un tel cas, si la loi de vitesse des disques est interrompue de façon aléatoire, il peut y avoir une détérioration des disques, sans parler du fait que le faisceau laser lui-même peut blesser l'opérateur.

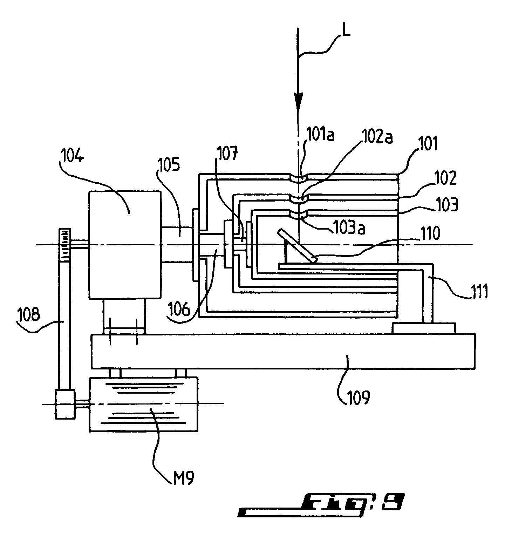

Aussi, comme on le voit sur les figures 5 et 6, on prévoit, au voisinage du faisceau laser L un écran réfléchissant 68 en cuivre poli par exemple et monté pivotant autour d'un axe 69. Cet écran 68 est sollicité dans la position visible en traits pointillés sur la figure 5, par des ressorts en spirale montrés schématiquement en 70 sur la figure 6. Un électro-aimant, repéré en 71 sur cette figure permet le positionnement hors faisceau de l'écran réfléchissant 68, comme on le voit en traits pleins sur la figure 5.

En outre, un bloc métallique 72, de forme sensiblement conique, reçoit l'eau du réseau 73 pour assurer le refroidissement d'une cartouche de graphite 74 insérée dans ledit bloc qui, lorsque l'écran réfléchissant 68 est interposé sur le faisceau laser L, absorbe avantageusement l'énergie dudit faisceau.

On a montré en 75 sur la figure 5 des ventilateurs susceptibles d'assurer un refroidissement efficace du dispositif obturateur, ces ventilateurs étant disposés suivant sensiblement un diamètre des disques 41, 42 et 43. On se reportera maintenant aux figures 7 et 8 pour décrire encore un exemple comparatif d'un dispositif obturateur.

Ce dispositif comprend essentiellement une roue 80 montée sur un bâti 81 et qui peut être entraînée en rotation par un moteur M8 dont l'arbre de sortie 82 porte un pignon 83 engrenant avec une denture 84 prévue sur la périphérie de la roue 80.

Cette roue 80 comporte encore sur sa partie supérieure une denture conique 84a engrenant avec des pignons coniques 85.

Comme on le voit bien sur la figure 7, chaque pignon conique 85 est porté par le bâti 81 et transmet sa rotation à un multiplicateur de vitesse 86 portant à sa sortie un support ou disque 87 muni d'une zone réfléchissante constituée par un petit miroir 88.

Suivant l'exemple comparatif représenté, et comme on le voit bien sur la figure 8, trois équipages tels que décrits précédemment sont portés par le bâti 81 et angulairement répartis de façon appropriée, de telle façon que le faisceau laser L, émis par la source S, puisse être réfléchi par les miroirs 88 pour aboutir à un prisme 89 situé au centre de la roue 80 et disposé de manière à renvoyer le faisceau suivant l'axe de rotation X-X′ de celle-ci. Passé le prisme 89, le faisceau laser L pourra sortir par un puits 90 ménagé au centre de ladite roue 80.

On comprend donc de ce qui précède que les trois disques 87 seront entraînés en rotation par le moteur M 8 et la roue dentée 80, de telle façon qu'à un moment donné les zones réfléchissantes 88 se renverront le faisceau laser L canalisé par le prisme 89 et le puits 90 vers la cible (non représentée). Il convient de noter que la cible à laquelle parvient le faisceau de façon cyclique peut ne pas être toujours la même. On pourra donc choisir convenablement l'emplacement et l'orientation des disques 87 et du prisme 89 et/ou donner à ce dernier un mouvement particulier par rapport à la roue 80.

Bien entendu, le nombre des disques, de même que leur position peut être quelconque de telle façon que l'impact cyclique du faisceau laser sur la cible puisse être réalisé.

Le dispositif obturateur qui vient d'être décrit en se référant aux figures 7 et 8 trouve une application avantageuse dans les opérations de pose des pare-brise de véhicules au moyen d'un robot. En effet, afin de bien positionner le pare-brise par rapport à la caisse du véhicule, il est nécessaire de déterminer la position précise dans l'espace de plusieurs points de l'encadrement de pare-brise, ce qui peut être réalisé à l'aide d'un faisceau laser et du dispositif obturateur des figures 7 et 8.

Dans la variante exemplaire illustrée par la figure 9, on voit un dispositif obturateur comprenant trois tambours 101, 102, 103 agencés concentriquement et entraînés par un système réducteur 104 à trois sorties 105, 106, 107 respectivement couplées aux tambours 101, 102, 103. Le système réducteur 104 est lui-même entraîné par un moteur M9 solidaire d'un bâti 109, et ce par l'intermédiaire d'une courroie ou analogue 108. Chaque tambour 101, 102, 103 comporte dans sa paroi une ouverture 101a, 102a, 103a respectivement, permettant, lorsqu'elles sont alignées la transmission du faisceau laser jusqu'à un miroir 110 porté, à l'intérieur du tambour 103 le plus interne, par un support 111 solidaire du bâti 109.

Cette variante de dispositif obturateur fonctionne comme décrit précédemment, et on en dira simplement que le faisceau laser L atteindra sa cible via le miroir 110, lorsque les trois ouvertures 101a, 102a et 103a seront alignées, cet alignement étant réalisé à des intervalles de temps prédéterminés.

On a donc réalisé suivant l'invention un dispositif d'obturation intermittente d'un faisceau laser comportant une pluralité de disques avec ouvertures, tournant chacun à une vitesse propre, et cela de telle façon que, suivant un rythme cyclique déterminable, les ouvertures des disques soient alignées pour permettre un impact périodique et de l'ordre de la milliseconde sur une cible.

Bien entendu, l'invention n'est nullement limitée aux modes de réalisation décrits et illustrés qui n'ont été donnés qu'à titre d'exemple.

C'est ainsi que le nombre, la forme et les dimensions des disques et des ouvertures ou fenêtres qu'ils comportent peuvent être quelconques.

## Revendications

1. Dispositif pour l'obturation d'un faisceau tel que le faisceau d'un laser continu destiné à frapper un point déterminé pour effectuer par exemple des opérations de soudage, du type comprenant au moins deux supports tournants (31, 32, 33 ; 41, 42, 43) comportant chacun au moins un élément autorisant la transmission du faisceau (31a, 32a, 33a ; 41a, 42a, 43a) et des moyens de commande pour animer ces supports d'un mouvement périodique et agissant de façon telle que les éléments autorisant la transmission du faisceau se trouvent, à des intervalles de temps prédéterminés, dans une position autorisant la transmission du faisceau (L) jusqu'audit point déterminé, l'élément autorisant la transmission du faisceau du support le plus rapide (31, 41) étant une fenêtre (31a, 41a) pratiquée dans le support caractérisé en ce que les supports sont des disques agencés perpendiculairement au faisceau précité (L), deux au moins des supports étant liés par un système de réduction (R), et en ce que la fenêtre (31a, 41a) a une dimension inférieure diamètre du faisceau laser.

2. Dispositif selon la revendication 1, caractérisé en ce que la fenêtre (31a, 41a) pratiquée dans le disque le plus rapide (31, 41) présente deux bords s'étendant suivant des rayons du disque et formant entre eux un angle égal à la moitié de l'angle au centre tangent au faisceau.

3. Dispositif selon la revendication 1 ou 2, caractérisé en ce que le système de réduction lie au moins deux supports constituant des disques (31, 32, 33) et comprend :
- un premier arbre (38) solidaire de l'un (31) des disques ; et
- un pignon (40) solidaire de cet arbre (38) et entraînant par l'intermédiaire d'une pignonerie (6, 7) une roue (8) dont le moyeu constitue un deuxième arbre (9) concentrique au premier (38) et sur lequel est monté l'autre disque (32).

4. Dispositif selon la revendication 1 ou 2, caractérisé en ce que le système de réduction reliant trois supports formant trois disques concentriques (41, 42, 43) percés chacun d'au moins une ouverture (41a, 42a, 43a) comprend :
- un premier arbre (49) entraîné par un moteur (M7) et sur lequel est monté un premier disque (41) ;
- une courroie (52) entraînée par ce premier arbre (49) et entraînant un arbre denté (56) monté à rotation sur une structure (91) mobile en rotation autour de l'axe de rotation des disques ;
- une première courroie crantée (57) coopérant avec l'arbre denté (56) et avec un moyeu fixe (58) ;
- un moyeu (59) solidaire de la structure mobile (91) et constituant un deuxième arbre concentrique au premier arbre (49) et sur lequel est monté un deuxième disque (42) ; et
- une deuxième courroie crantée (61) coopérant avec l'arbre denté (56) et avec une roue dentée (62) dont le moyeu (63) constitue un troisième arbre concentrique aux deux autres et sur lequel est monté un troisième disque (43).

## Claims

1. Device for the obturation of a beam such as a continuous laser beam intended to hit a determined point for effecting for example welding operations, of the type comprising at least two rotary supports (31, 32, 33; 41, 42, 43) comprising each one at least one element allowing the transmission of the beam (31a, 32a, 33a; 41a, 42a, 43a) and control means for imparting to these supports a periodic motion and acting in such a manner that the elements allowing the transmission of the beam are located at predetermined time intervals in a position allowing the transmission of the beam (L) to the said determined point, the element allowing the transmission of the beam from the fastest support (31, 41) being a window (31a, 41a) formed in the support, characterized in that the supports are disks arranged in perpendicular relation to the aforesaid beam (L), at least two of the supports being connected by a reducing system (R) and in that the window (31a, 41a) has a dimension smaller than the diameter of the laser beam.

2. Device according to claim 1, characterized in that the window (31a, 41a) formed in the fastest disk (31, 41) exhibits two edges extending along radii of the disk and forming between them an angle equal to one half of the angle at the centre tangent to the laser.

3. Device according to claim 1 or 2, characterized in that the reducing system connects at least two supports constituting disks (31, 32, 33) and comprises :
- a first shaft (38) made fast to one (31) of the disks; and
- a pinion (40) made fast to this shaft (38) and driving through the medium of a gear train (6, 7) a gear (8) the hub of which constitutes a second shaft (9) concentric with the first one (38) and onto which is mounted the other disk (32).

4. Device according to claim 1 or 2, characterized in that the reducing system connecting three supports forming three concentric disks (41, 42, 43) bored each one through at least one opening (41a, 42a, 43a) comprises :
- a first shaft (49) driven by a motor (M7) et onto which is mounted a first disk (41) ;
- a belt (52) driven by this first shaft (49) and driving a toothed shaft (56) mounted for rotation onto a structure (91) movable in rotation about the axis of rotation of the disks ;
- a first toothed belt (57) co-operating with the toothed shaft (56) and with a stationary hub (58) ;
- a hub (59) made fast to the movable structure (91) and constituting a second shaft concentric with the first shaft (49) and onto which is mounted a second disk (42) ; and
- a second toothed belt (61) co-operating with the toothed shaft (56) and with a toothed wheel (62) the hub (63) of which constitutes a third shaft concentric with the two other ones and onto which is mounted a third disk (43).

## Patentansprüche

1. Vorrichtung zur Unterbrechung eines Strahlenbündels, wie eines kontinuirlichen Laserstrahlenbündels, das bestimmt ist, an einem bestimmten Punkt aufzutreffen, um z.B. Schweissvorgänge durchzuführen, derjenigen Gattung, mit wenigstens zwei Tragglieder (31, 32, 33 ; 41, 42, 43), die jeweils wenigstens ein die Übertragung des Strahlenbündels gestattendes Element (31a, 32a, 33a ; 41a, 42a, 43a) und Antriebsmittel, um diesen Traggliedern eine periodische Bewegung zu verleihen, aufweisen, welche derart wirken, dass die die Übertragung des Strahlenbündels gestattenden Elemente sich in vorbestimmten Zeiträumen in einer die Übertragung des Strahlenbündels (L) bis zu dem besagten bestimmten Punkt gestattenden Stellung befinden, wobei das die Übertragung des Strahlenbündels von dem schnellsten Tragglied (31, 41) ein in dem Tragglied gebildetes Fenster (31a, 41a) ist, dadurch gekennzeichnet, dass die Tragglieder senkrecht zum vorgenannten Strahlenbündel (L) angeordnete Scheibe sind, wobei wenigstens zwei der Tragglieder durch ein Reduktionssystem (R) verbunden sind und dass das Fenster (31a, 41a) eine kleinere Abmessung als der Durchmesser des Laserstrahlenbündels hat.

2. Vorrichtung nach Anspruch 1, dadurch gekennzeichnet, dass das in der schnellsten Scheibe (31, 41) gebildete Fenster (31a, 41a) zwei sich entlang Radien der Scheibe erstreckende und miteinander einen der Hälfte des an dem Strahlenbündel tangierenden Mittelpunktwinkels gleichen Winkel bildende Ränder aufweist.

3. Vorrichtung nach Anspruch 1 oder 2, dadurch gekennzeichnet, dass das Reduktionssystem wenigstens zwei Scheiben bildende Tragglieder (31, 32, 33) verbindet und
- eine erste mit der einen (31) der Scheiben fest verbundene Welle (38); und
- ein mit dieser Welle (38) fest verbundenes und über ein Zahnradvorgelege (6, 7) ein Rad (8) antreibendes Ritzel (40) aufweist, wobei die Radnabe eine mit der ersten Welle (38) konzentrische Welle (9), an welcher die andere Scheibe (32) angeordnet ist, bildet.

4. Vorrichtung nach Anspruch 1 oder 2, dadurch gekennzeichnet, dass das drei drei jeweils mit wenigstens einer Öffnung (41a, 42a, 43a) durchbohrte konzentrische Scheiben (41, 42, 43) bildende Tragglieder verbindende Reduktionssystem umfasst:
- eine durch einen Motor (M7) angetriebene erste Welle (49), an welcher eine erste Scheibe (41) angeordnet ist;
- einen durch diese erste Welle (49) angetriebenen Riemen (52), der eine an einem um die Drehachse der Scheiben herum drehbar bewegbaren Aufbau (91) drehbar angeordnete gezahnte Welle (56) antreibt;
- einen mit der gezahnten Welle (56) und mit einer ortsfesten Nabe (58) zusammenwirkenden ersten Zahnriemen (57);
- eine mit dem bewegbaren Aufbau (91) fest verbundene Nabe, die eine zweite zur ersten Welle (49) konzentrische Welle, an welcher eine zweite Scheibe (42) angeordnet ist, bildet; und
- einen zweiten mit der gezahnten Welle (56) und mit einem Zahnrad (62) zusammenwirkenden Zahnriemen (61), wobei die Zahnradnabe (63) eine dritte mit den beiden anderen konzentrische Welle, an welcher eine dritte Scheibe (43) angeordnet ist, bildet.
